# FASCICULE DE BREVET EUROPEEN

(11) **EP 0 351 271 B1**
(45) Date de publication et mention de la délivrance du brevet: **19.05.1993**
(21) Numéro de dépôt: 89401802.7
(22) Date de dépôt: 26.06.1989
(51) Int. Cl.: F04D 13/14, H02K 11/00

(54) **Couplage de deux moteurs électriques**
Kopplung von zwei elektrischen Motoren
Coupling of two electrical motors

(30) Priorité: 13.07.1988 FR 8809564
(43) Date de publication de la demande: 17.01.1990
(73) Titulaire: POMPES SALMSON Société Anonyme à directoire dite:, 92504 Rueil Malmaison (FR); WILO WERKE GMBH & CO. Pumpen- und Apparatebau, D-44263 Dortmund (DE)
(72) Inventeur: Kernours, Michel, F-35370 Mondevert (FR); Ciron, Maurice, F-53260 Entrammes (FR); Fournier, Alain, F-53000 Laval (FR); Hahn, Martin, D-4600 Dortmund 1 (DE); Huebner, Juergen, D-4600 Dortmund 41 (DE); Radzey, Juergen, D-5840 Schwerte-Holzen (DE)
(74) Mandataire: Hirsch, Marc-Roger

(56) Documents cités:
- DE-A- 3 342 967
- FR-A- 1 115 826
- FR-A- 2 105 733

## Description

La présente invention concerne un couplage de deux moteurs électriques qui sont reliés mécaniquement chacun à une pompe distincte débitant sur un même réseau hydraulique, par exemple un réseau d'eau chaude de chauffage et où chaque moteur est équipé d'un moyen de jonction relié aux divers fils de bobinage de ce moteur et apte à assurer la mise en marche automatique d'un moteur en cas de défaillance de l'autre moteur.

Les pompes qui assurent souvent des fonctions vitales pour le maintien en service d'installations importantes telles que le circuit de chauffage d'un ensemble d'habitation, sont maintenant dans de nombreux cas montées en un ensemble de deux pompes qui sont susceptibles de marcher alternativement ou simultanément et dans lequel une pompe défaillante est automatiquement remplacée par la pompe restée en état de marche.

Ainsi, FR-A-2 105 733 décrit une installation de chauffage comportant un circuit de circulation de fluide échangeur muni d'un circulateur multiple comportant deux moteurs et apte à fonctionner soit par action de l'une des unités de pompage indépendamment de l'autre, soit par action simultanée combinée de deux unités de pompage. On connaît par ailleurs de FR-A-1 115 826 une installation de pompage comportant deux rotors ayant chacun son propre moteur électrique d'entraînement, montés dans un carter commun ne comportant qu'un seul orifice d'admission et un seul orifice de sortie, et une installation électrique pour lesdits moteurs destinée à faire passer automatiquement la commande d'un moteur de pompe sur l'autre, lorsqu'un premier moteur de pompe cesse de fonctionner.

Afin de réduire le coût d'installation mécanique des deux pompes, celles-ci sont en général montées côte à côte sur un même circuit hydraulique mais il est néanmoins nécessaire de réaliser entre les deux moteurs des couplages complexes passant par des tableaux de contrôle et de surveillance situés à distance de l'ensemble des deux pompes. Chacun des moteurs étant susceptible, par définition, de remplir l'ensemble des fonctions de l'autre doit être équipé à distance d'un système de commande et de surveillance complet, ce qui fait que cette solution à deux moteurs intégrés se révèle presque aussi onéreuse à équiper et à commander que le couplage de deux moteurs complètement séparés tel que réalisé auparavant.

L'un des buts de la présente invention est précisément de simplifier le couplage de deux moteurs électriques de pompe débitant sur un même réseau hydraulique en supprimant le double emploi d'un même équipement, en particulier d'un équipement d'horloge relativement onéreux, tout en améliorant la fiabilité du couplage qui peut être, en quelque sorte, réalisé "en direct" entre les deux moteurs situés en général à proximité l'un de l'autre, sans devoir nécessairement passer par un tableau de couplage et de surveillance.

A cet effet, selon l'invention, le moyen de jonction du premier moteur comporte une interface à connexions débrochables raccordée à un premier module de fonction interchangeable équipé d'un dispositif de surveillance du fonctionnement du moteur, indiquant par exemple la présence de la tension d'alimentation et/ou le sens de rotation du moteur et/ou un défaut moteur et d'un dispositif de protection thermique et le moyen de jonction du deuxième-moteur comporte une interface à connexions débrochables raccordée à un deuxième module de fonction interchangeable équipé du même dispositif de surveillance de fonctionnement et du même dispositif de protection thermique que le premier module et en plus d'une horloge de programmation du fonctionnement du premier et du deuxième moteur, par exemple pour la marche de jour sur le premier moteur avec le deuxième moteur en appoint et la marche de nuit sur le premier moteur seul et des bornes du deuxième module de fonction sont reliées, d'une part, à un commutateur de l'horloge, de manière à provoquer la marche alternée des deux moteurs sous le contrôle de l'horloge et, d'autre part, en liaison croisée, à des bornes du premier module pour assurer la marche automatique du deuxième moteur en cas de défaillance du premier moteur.

L'utilisation de modules de fonction interchangeables sur chacun des moteurs permet de réaliser des couplages à la demande, par simple embrochage de modules couplés entre eux à l'aide d'un câblage simple qui s'étend sur une longueur voisine de la distance séparant les deux moteurs. L'addition d'autres moteurs au couplage peut également s'effectuer directement par l'intermédiaire de modules de fonction standards.

Selon un autre mode de réalisation de l'invention, les premier et deuxième modules de fonction sont couplés entre eux par un dispositif de commutation automatique/manuelle permettant d'obtenir par commande manuelle la marche forcée du premier ou du deuxième moteur ou simultanément du premier et du deuxième moteur.

Les premier et deuxième modules de fonction peuvent également être couplés entre eux via l'horloge, en plus de la position de marche alternée des deux moteurs, selon une position de marche forcée automatique du premier et du deuxième moteur.

Chacun des modules de fonction peut comporter une plaque de circuit imprimé qui est munie de bornes susceptibles de s'enficher de façon simple sur des bornes correspondantes de l'interface, qui présente un logement traversé par un organe de sélection de vitesses et qui porte les éléments du dispositif de surveillance de fonctionnement.

D'autres buts, avantages et caractéristiques apparaîtront à la lecture de la description de divers modes de réalisation de l'invention, faite à titre non limitatif et en regard du dessin annexé, ou:
- la figure 1 représente schématiquement le couplage selon l'invention de deux moteurs électriques d'un circulateur de chauffage central à deux pompes, à l'aide de deux modules de fonction distincts embrochés chacun sur l'un des moteurs et couplés entre eux;
- la figure 2 représente schématiquement le premier moteur équipé de son module de fonction;
- la figure 3 représente schématiquement les deux modules de fonction des deux moteurs, couvercle enlevé.

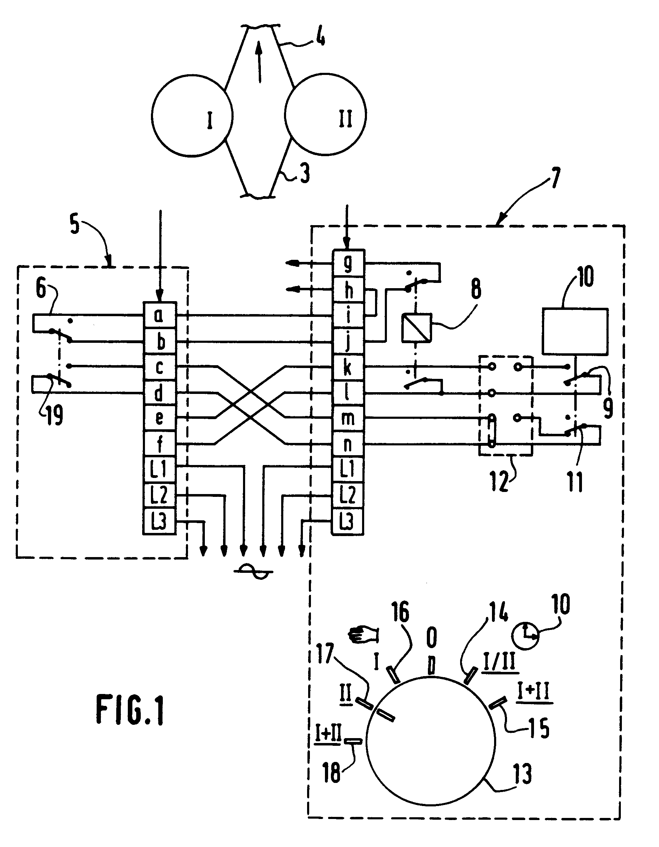

Sur la figure 1 sont représentés les couplages d'une installation de pompage (généralement pour une installation de chauffage à eau chaude mais aussi pour une installation d'eau potable ou une installation de relevage d'eau) à deux pompes où chacune des pompes peut être branchée en réserve mais peut aussi fonctionner en appoint de pompage pour des périodes de pointe, comme la période de jour en chauffage. De telles installations à deux pompes sont économiquement réalisées sur le plan mécanique en disposant les deux rotors des pompes I et II dans le même carter qui est relié au même réseau d'aspiration 3 et qui débouche sur le même réseau de refoulement 4, les deux moteurs électriques asynchrones I et II d'entrainement des deux pompes se trouvant ainsi placés à faible distance l'un de l'autre, ce qui facilite leur interconnexion et leur surveillance.

Le moteur I de la première pompe est équipé d'un module de fonction 5 qui assure sa protection thermique. Les bornes a et b du module 5 sont reliées à une téléalarme 6 et aux bornes i et j du module 7 du moteur de pompe II, tandis que les bornes c et d sont reliées à une commande du moteur II. Les bornes L1, L2, L3 du module 5 sont reliées aux trois phases du réseau triphasé.

Le moteur de pompe II est équipé du module de fonction 7 qui présente deux bornes supplémentaires g et h, reliées à une téléalarme. La borne g est reliée également par l'intermédiaire d'un commutateur de marche 8 à la borne j, tandis que les bornes h et i sont pontées. Les bornes k et l sont reliées, d'une part, au commutateur 9 d'une horloge 10 qui provoque la marche de jour de la pompe II en appoint de la pompe I et, d'autre part, en liaison croisée, aux bornes e et f du module 5 du moteur I, pour assurer la marche automatique du moteur II en cas de défaillance du moteur I. Les bornes m et n sont reliées, d'une part, au commutateur 11 de l'horloge 10 et, d'autre part, aux bornes c et d du module 5 de la pompe I, afin d'assurer la marche automatique en secours en cas de défaillance du moteur I. Comme indiqué précédemment, les bornes i et j sont reliées aux bornes a et b de téléalarme du module 5 du moteur I et les bornes L1, L2 et L3 sont reliées aux trois phases de l'alimentation triphasées.

La commutation automatique/manuelle 12 reliée aux bornes k, l, m, n du module de fonction 7 et dont les positions sont représentées dans l'angle inférieur droit de la figure en face d'un bouton de commande 13, comporte, en-dehors de la position d'arrêt O, deux crans 14 et 15 de marche automatique (I ou II et I + II) contrôlés par l'horloge 10 et des crans de marche manuelle respectifs:
- 16 pour la marche du seul moteur I,
- 17 assurant la marche du seul moteur II,
- 18 de marche simultanée des deux moteurs I et II.

La mise en marche automatique d'un moteur en cas de défaillance de l'autre moteur est obtenue à l'aide d'un relais 19 branché sur la téléalarme 6.

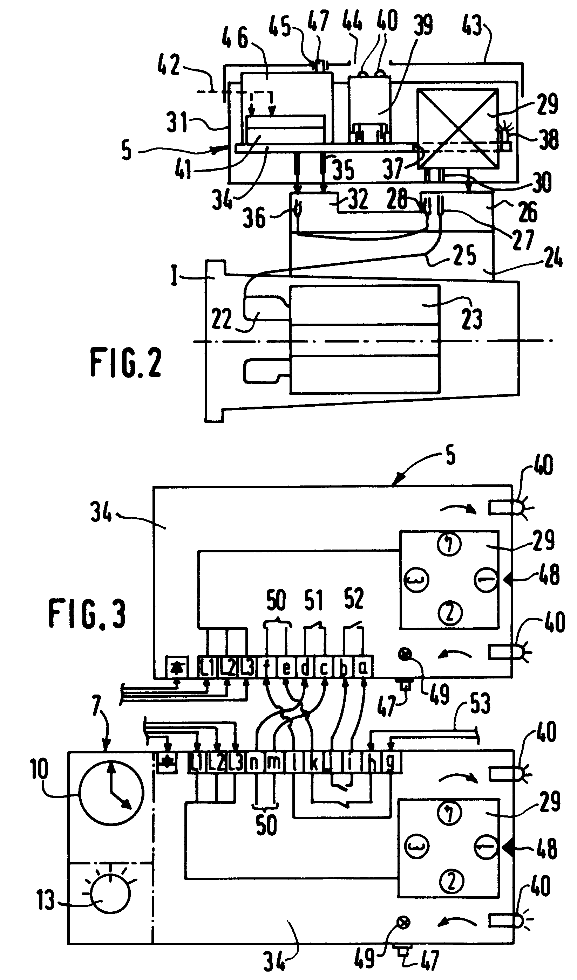

Sur la figure 2, on a représenté schématiquement le premier moteur électrique I équipé de son module de fonction 5 représenté débranché. Les bobinages 22 du stator 23 sont reliés, par un câblage interne 25 dans une embase 24 qui surmonte le moteur I, à un jeu de bornes 26 pour le réglage de la vitesse du moteur. Afin de permettre le réglage de la vitesse du moteur, le bobinage de chaque phase du moteur asynchrone est, par exemple, subdivisé en plusieurs longueurs qui sont alternativement couplées ou non couplées en série ou en parallèle, ce qui assure un rendement relativement bon du moteur pour toutes les vitesses de rotation de la pompe, ces vitesses étant imposées en fait au rotor du moteur électrique par le couple résistant du rotor de la pompe.

Le jeu de bornes de vitesses 26 comporte des bornes 27 du côté du bobinage 22 du moteur et des bornes 28 du côté de l'arrivée de la tension d'alimentation. Lorsque le moteur I est en service,les bornes 27 et 28 sont reliées entre elles par l'intermédiaire d'un boîtier commutable 29 qui vient s'enficher sur elles. Le boîtier commutable 29 est enfiché par des bornes 30 selon diverses orientations dont chacune assure une vitesse de rotation différente du moteur.

Les bornes 28 (du jeu de bornes 26) placées du côté de l'arrivée de la tension sont reliées à l'intérieur de l'embase 24 à un jeu de bornes de fonction 32 formant interface sur laquelle vient s'enficher le module de fonction 5 ou premier module de fonction. Le module de fonction 5 est constitué par une plaque de circuit imprimé 34 logée dans une enveloppe 31 et munie de broches 35 susceptibles de s'enficher de façon simple et sans faire intervenir des outillages spéciaux (par exemple de soudure) sur les bornes à prises ou à griffes 36 du jeu de bornes de fonction 32. La plaque de circuit imprimé 34 présente un logement 37 traversé par le boîtier commutable de sélection de vitesses 29 et elle porte, débouchant sur l'extérieur, un témoin lumineux 38 (par exemple une petite lampe néon) de la présence de la tension sur le moteur. La plaque de circuit imprimé 34 comporte, en montage embroché et donc interchangeable et facile à remplacer en cas de défaillance, un détecteur 39 du sens de rotation du moteur indiquant, à l'aide de lampes néon 40 alternativement allumées ou éteintes, le sens de rotation du rotor du moteur I lorsque ce moteur est un moteur triphasé. Les liaisons électriques, non représentées en détail, de la plaque de circuit imprimé 34, aboutissent à un jeu de bornes ou bornier 41 de raccordement vers l'extérieur, par un câble 42 assurant l'amenée des phases du réseau électrique et la liaison vers le module 7 du moteur II.

La plaque de circuit imprimé 34 porte en plus, légèrement décalé en arrière, un dispositif 46 de protection thermique du moteur avec un bouton de réarmement manuel 47 qui vient dépasser à l'extérieur de son boîtier. Après la mise en place du module de fonction 5 et du boîtier commutable de sélection de vitesse 29, l'ensemble de la plaque de circuit imprimé 34 et de ses organes de contrôle et de surveillance constituant le module 5, est recouvert d'un couvercle 43 à travers lequel sont percées des fenêtres 44 et 45 laissant apparaître les indications de détection de sens de rotation 39 et du dispositif de protection thermique 46.

Sur la figure 3, sont représentés les deux modules de fonction 5 et 7 des moteurs I et II sous une forme schématique faisant apparaître les modules couvercle enlevé avec leurs branchements. Comme on le voit, la plaque de circuit imprimé 34 de ces modules est traversée par le boîtier commutable de vitesse 29 enfiché par ses bornes 30 (voir la figure 1) sur le jeu de bornes de vitesses 26. Un repère 48 du circuit 34 permet de repérer la position de branchement du boîtier 29 qui porte au dos des chiffres de vitesse 1 à 4. La plaque 34 porte latéralement des lampes néon 40 indiquant, lorsqu'elles sont allumées individuellement, à la fois la présence de la tension sur le bobinage du moteur et le sens de rotation de celui-ci. Le voyant de défaut 49 du dispositif de protection thermique 46 intégré à la plaque de circuit 34 (voir la figure 2) est placé à proximité du bouton de réarmement manuel 47.

Sur le module 5 du moteur I, les bornes a à f autres que les bornes de phase sont non seulement reliées aux bornes du module 7 (comme représenté à la figure 1) mais elles peuvent également être reliées à l'extérieur pour réaliser des fonctions complémentaires de télécommande ou de télésurveillance. Les bornes f et e peuvent être reliées à un système de commande à distance 50. Les bornes d et c peuvent être reliées à un système de téléalarme 51. Les bornes b et a peuvent être reliées à un système de report de défaut 52.

Sur le module 7 de la pompe II où l'on repère la présence supplémentaire de l'horloge 10 et du bouton 13 de commande de marche automatique/manuelle, les bornes n et m peuvent être reliées au système de commande à distance 50 tandis que les bornes g et h peuvent être reliées à un circuit 53 de report de téléalarme.

Selon une disposition particulièrement avantageuse du couplage des deux moteurs selon l'invention, les modules de fonction 5 et 7 qui sont amovibles sont précâblés et couplés entre eux avant leur montage sur leur moteur par simple enfichage, ce qui simplifie énormément le câblage final des deux moteurs après leur mise en place sur le circuit de pompe double 3,4.

## Revendications

1. Couplage de deux moteurs électriques (I et II) reliés mécaniquement chacun à une pompe distincte débitant sur un même réseau hydraulique, par exemple un réseau d'eau chaude de chauffage, chaque moteur étant équipé d'un moyen de jonction relié aux divers fils de bobinage (22) de ce moteur et apte à assurer la mise en marche automatique d'un moteur (II ou I) en cas de défaillance de l'autre moteur (I ou II), caractérisé en ce que le moyen de jonction (24) du premier moteur (I) comporte une interface (32) à connexions débrochables raccordée à un premier module de fonction interchangeable (5) équipé d'un dispositif de surveillance du fonctionnement du moteur, indiquant par exemple la présence de la tension d'alimentation (témoin lumineux 38) et/ou le sens de rotation du moteur (détecteur 39) et/ou un défaut moteur (voyant 49), et d'un dispositif de protection thermique (46), en ce que le moyen de jonction (24) du deuxième moteur (II) comporte une interface (32) à connexions débrochables raccordée à un deuxième module de fonction interchangeable (7) équipé du même dispositif de surveillance de fonctionnement et du même dispositif de protection thermique que le premier module (5) et en plus d'une horloge (10) de programmation du fonctionnement du premier (I) et du deuxième moteur (II), par exemple pour la marche de jour sur le premier moteur (I) avec le deuxième moteur (II) en appoint et la marche de nuit sur le premier moteur (I) seul, et en ce que des bornes (k et l) du deuxième module de fonction (7) sont reliées, d'une part, à un commutateur (9) de l'horloge (10), de manière à provoquer la marche alternée des deux moteurs (I, II) sous le contrôle de l'horloge (10) et, d'autre part, en liaison croisée, à des bornes (e, f) du premier module (5) pour assurer la marche automatique du deuxième moteur (II) en cas de défaillance du premier moteur (I).

2. Couplage de deux moteurs électriques selon la revendication 1, caractérisé en ce que les premier et deuxième modules de fonction (5,7) sont couplés entre eux par un dispositif de commutation automatique/manuelle (12) permettant d'obtenir par commande manuelle la marche forcée du premier (I) ou du deuxième moteur (II) ou simultanément du premier et du deuxième moteur.

3. Couplage de deux moteurs électriques selon la revendication 1 ou 2, caractérisé en ce que les premier et deuxième modules de fonction (5,7) sont couplés entre eux via l'horloge (10), en plus de la position de marche alternée des deux moteurs, selon une position de marche forcée automatique du premier et du deuxième moteur (I, II).

4. Couplage de deux moteurs électriques selon les revendications 1 à 3, caractérisé en ce que chacun des modules de fonction (5, 7) comporte une plaque de circuit imprimé (34) qui est munie de bornes (35) susceptibles de s'enficher de façon simple sur des bornes correspondantes (36) de l'interface (32), qui présente un logement (37) traversé par un organe (29) de sélection de vitesses et qui porte des éléments du dispositif de surveillance de fonctionnement (38, 39, 49).

## Claims

1. Coupling for two electric motors (I and II) each mechanically linked to a separate pump delivering their output into the same hydraulic circuit, for example a hot water heating circuit, each motor being fitted with a joining means linked to the various windings (22) of said motor and adapted to ensure automatic startup of a motor (II or I) should the other motor (I or II) fail, characterized in that said joining means (24) of the first motor (I) comprise an interface (32) provided with releasable connections, said interface being connected to a first replaceable function module (5) fitted with a device for monitoring the operation of its motor, indicating, for example, the presence of the supply voltage (indicator lamp 38) and/or the direction of rotation of the motor (sensor 39) and/or failure of the motor (lamp 49), and with a thermal protection device (46), in that the joining means (24) of the second motor (II) comprises an interface (32) having releasable connections, said interface being connected to a second replaceable function module (7) fitted with the same operating monitoring device and the same thermal protection device as the first module (5) and additionally with a clock (10) for programming the operation of the first (I) and the second (II) motors, for example determining that said first motor (I) operates during the day with the second motor (II) acting as a'booster and night operation being on said first motor (I) alone, and in that the terminals (k and l) of the second function module (7) are linked, firstly, to a switch (9) for said clock (10) whereby the two motors (I, II) are caused to operate alternately under the control of said clock (10) and, secondly, via a cross linkage, to the terminals (e, f) of the first module (5) whereby automatic operation of the second motor (2) is ensured should said first motor (I) fail.

2. Coupling for two electric motors according to claim 1, characterized in that the first and second function modules (5, 7) are coupled to each other by an automatic/manual switching device (12) allowing forced operation of the first (I) or the second (II) motor, or of both motors simultaneously, to be obtained by manual control.

3. Coupling for two electric motors according to claim 1 or 2, characterized in that the first and second function modules (5, 7) are mutually coupled via the clock (10), in addition to the alternative operation position of the two motors, in accordance with an automatic forced operation position for said first and said second motor (I, II).

4. Coupling for two electric motors according to claims 1 to 3, characterized in that each one of the function modules (5, 7) comprises a printed circuit board (34) fitted with terminals (35) adapted to be easily plugged into corresponding terminals (36) of the interface (32), which includes a housing (37) through which a speed selection component (29) passes, and which carries elements of the operation monitoring device (38, 39, 49).

## Patentansprüche

1. Kopplung zweier Elektromotoren (I und II), die jeweils mechanisch mit einer anderen Pumpe verbunden sind, welche in dasselbe hydraulische Netz, zum Beispiel ein Warmwasser-Heizungsnetz, liefern, wobei jeder Motor mit einer Verbindungseinrichtung versehen ist, die mit den verschiedenen Spulendrähten (22) dieses Motors verbunden und in der Lage-sind, den automatischen Betrieb eines Motors (II oder I) im Fall des Versagens des anderen Motors (I oder II) zu gewährleisten, dadurch gekennzeichnet, daß die Verbindungseinrichtung (24) des ersten Motors (I) ein Interface (32) mit lösbaren Verbindungen, das mit einem ersten auswechselbaren Funktionsmodul (5) verbunden ist, welches eine Vorrichtung zur Überwachung der Funktion des Motors, die zum Beispiel das Vorhandensein der Versorgungsspannung (Kontrolleuchte 38) und/oder die Drehrichtung des Motors (Detektor 39) und/oder einen Motordefekt (Anzeige 49) anzeigt, und eine Wärmeschutzvorrichtung (46) aufweist, daß die Verbindungseinrichtung (24) des zweiten Motors (II) ein Interface (32) mit lösbaren Verbindungen aufweist, das mit einem zweiten auswechselbaren Funktionsmodul (7) verbunden ist, welches mit der gleichen Vorrichtung zur Überwachung der Funktion des Motors und der gleichen Wärmeschutzvorrichtung versehen ist wie das erste Modul und darüber hinaus mit einer Uhr (10) zum Programmieren der Funktion des ersten (I) und des zweiten Motors (II), zum Beispiel für den Tagesbetrieb mit dem ersten Motor (I) und dem zweiten Motor (II) als Reserve und den Nachtbetrieb allein mit dem ersten Motor (I), und daß Anschlüsse (k und l) des zweiten Funktionsmoduls (7) einerseits derart mit einem Schalter (9) der Uhr (10) verbunden sind, daß ein abwechselnder Betrieb der beiden Motoren (I, II) unter Steuerung durch die Uhr (10) bewirkt wird, und andererseits in Kreuzkopplung mit Anschlüssen (e, f) des ersten Moduls (5) verbunden sind, um den automatischen Betrieb des zweiten Motors (II) im Fall des Versagens des ersten Motors (I) zu gewährleisten.

2. Kopplung zweier Elektromotoren nach Anspruch 1, dadurch gekennzeichnet, daß das erste und zweite Funktionsmodul (5, 7) über eine Automatik-/Manuell-Schaltvorrichtung (12) miteinander verbunden sind, die es ermöglicht, durch manuelle Steuerung einen zwangsweisen Betrieb des ersten (I) oder des zweiten Motors (II) oder einen simultanen Betrieb des ersten und zweiten Motors zu erhalten.

3. Kopplung zweier Elektromotoren nach Anspruch 1 oder 2, dadurch gekennzeichnet, daß das erste und zweite Funktionsmodul (5, 7), zusätzlich zur Position des abwechselnden Betriebs der beiden Motoren, entsprechend einer Position des automatischen zwangsweisen Betriebs des ersten und zweiten Motors (I, II) über die Uhr (10) miteinander verbunden sind.

4. Kopplung zweier Elektromotoren nach Ansprüchen 1 bis 3, dadurch gekennzeichnet, daß jedes Funktionsmodul (5, 7) eine gedruckte Schaltungsplatte (34) aufweist, die mit Anschlüssen (35) versehen ist, welche auf einfache Weise auf die entsprechenden Anschlüsse (36) des Interface (32) aufsteckbar sind, wobei die Platte eine von einem Geschwindigkeitswählorgan (29) durchsetzte Aufnahme (37) aufweist und die Elemente der Funktionsüberwachungsvorrichtung (38, 39, 49) trägt.
